Europäisches Patentamt

European Patent Office

Office européen des brevets

(19)

(11) Numéro de publication: **0 016 692**
**B1**

(12) **FASCICULE DE BREVET EUROPEEN**

(45) Date de publication du fascicule du brevet: **13.04.83**

(51) Int. Cl.³: **H 04 Q 1/448, H 04 Q 7/02**

(21) Numéro de dépôt: **80400336.6**

(22) Date de dépôt: **14.03.80**

(54) Circuit comparateur de fréquences et dispositif d'appel sélectif comportant un tel circuit.

(30) Priorité: **16.03.79 FR 7906742**

(43) Date de publication de la demande:
**01.10.80 Bulletin 80/20**

(45) Mention de la délivrance du brevet:
**13.04.83 Bulletin 83/15**

(84) Etats contractants désignés:
**DE GB NL SE**

(56) Documents cités:
**DE - B - 2 420 507**
**FR - A - 2 307 402**
**GB - A - 1 482 629**

(73) Titulaire: **THOMSON-CSF**
**173, Boulevard Haussmann**
**F-75379 Paris Cedex 08 (FR)**

(72) Inventeur: **Butin, Henri**
**SCPI - 173, Bld Haussmann**
**F-75360 Paris Cedex 08 (FR)**

(74) Mandataire: **Courtellemont, Alain et al,**
**THOMSON-CSF SCPI 173, Bld Haussmann**
**F-75379 Paris Cedex 08 (FR)**

Courier Press, Leamington Spa, England.

Circuit comparateur de fréquences et dispositif d'appel sélectif comportant un tel circuit

La présente invention concerne un circuit comparateur de fréquences du type des circuits comparateurs de fréquences qui comportent des moyens de comparaison des signes A, F, $F_q$ des amplitudes instantanées respectives d'un signal reçu, d'un signal de référence de période T et du signal de référence déphasé de

$$\frac{T}{4},$$

des moyens de comptage fournissant un premier signal proportionnel à la différence entre les sommes des intervalles de temps où A est différent de F et $F_q$ et où A est identique à F et $F_q$ et un second signal proportionnel à la différence entre les sommes des intervalles de temps où A est différent de F et identique à $F_q$ et où A est identique à F et différent de $F_q$.

La présente invention est destinée, en particulier, aux dispositifs d'appel sélectif utilisés en radiotéléphonie ou utilisés pour l'appel sélectif de personnes. Dans ces dispositifs les numéros d'appel sont transmis sous forme de tonalités successives, chaque tonalité représentant par exemple un chiffre. Si un poste dont le numéro d'appel est composé de trois chiffres, par exemple 3—9—2, reçoit une suite de tonalités, ce poste, pour savoir si l'appel sélectif lui est destiné, recherchera la tonalité correspondant au chiffre 3 puis, s'il la trouve, la tonalité correspondant au chiffre 9, puis, si la tonalité correspondant au chiffre 9 suit immédiatement la tonalité correspondant au chiffre 3, il recherchera la tonalité correspondant au chiffre 2. Le poste doit donc être capable de reconnaître une tonalité prédéterminée, dite tonalité attendue.

Il est connu, par le brevet français 2 333 247, d'effectuer cette recherche de tonalités attendues grâce à une comparateur de fréquences du type indiqué au début de cette description et dans lequel les moyens de comptage effectuent un comptage à partir d'un instant donné; cet instant donné est généralement déterminé par une impulsion de commande fournie périodiquement par un générateur d'impulsions propre au circuit comparateur de fréquences.

De tels circuits comparateurs de fréquences fonctionnent bien mais ne permettent pas d'effectuer, avec les moyens de comptage, des comptages qui, à un moment donné, portent sur la durée de la tonalité attendue; il faudrait en effet pour cela que l'impulsion de commande soit envoyée au moment das changements de tonalités, or ceci n'est en général pas possible, surtout lors de la recherche de la première tonalité d'une série de tonalités successives attendues et ne peut être dû qu'au hasard. Ces circuits comparateurs de fréquences ne permettent donc pas de profiter pleinement du fait que, généralement, la durée des tonalités reçues est connue; ils sont donc plus sensibles aux bruite que si les comptages par les moyens de comptage pouvaient être systématiquement effectués sur la durée de la tonalité.

Le but de la présente invention est de réduire cette sensibilité aux bruite.

Ceci est rendu possible en effectuent des comptages qui, à tout moment, ne tiennent compte, au plus, que de ce qui a été fourni aux moyens de comptage au cours de le durée D quid précède, et en donnant à cette durée D une valeur aussi proche que possible de la durée de la tonalité attendue. Cela revient à dire qu'il est effectué, à l'aide des moyens de comptage, une intégration flottante sur un temps D.

Selon l'invention un circuit comparateur de fréquences du type indiqué au début de cette description est caractérisé en ce qu'il comporte un circuit à retard dont la durée du retard est KT (K entier positif), recevant un signal représentatif de A, et un circuit de blocage bloquant le fonctionnement des moyens de comptage quand les signes des amplitudes des signaux d'entrée et de sortie du circuit à retard sont identiques.

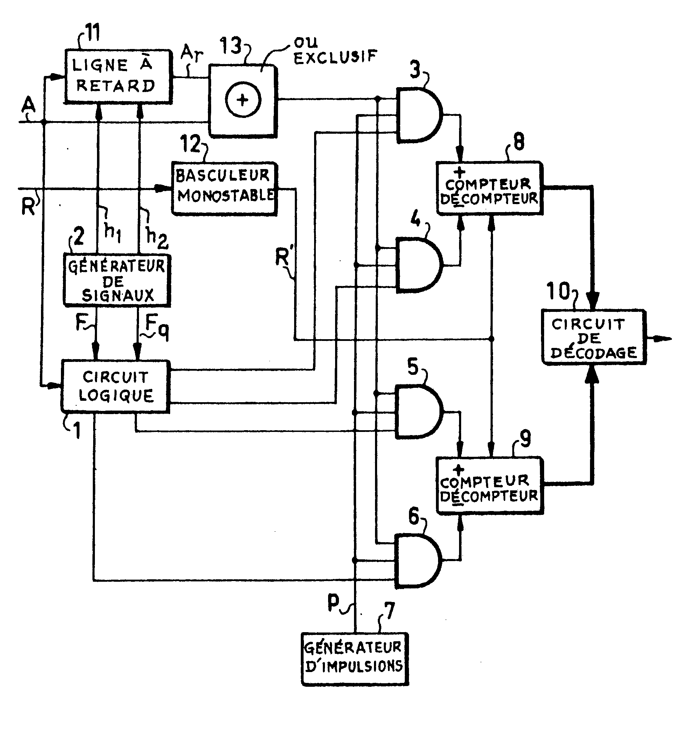

L'invention sera mieux comprise et d'autres caractéristiques apparaîtront à l'aide de la description ci-après et de la figure s'y rapportant qui représente un circuit comparateur de fréquences selon l'invention.

Un rappel concernant le fonctionnement de certains circuits comparateurs de fréquences selon l'art connu permettra de mieux comprendre l'invention.

Dans certains circuits comparateurs de fréquences connus le signal reçu, et dont le fréquence doit être comparée à une fréquence f, est écrêté pour former un signal en créneaux A. Deux signaux en créneaux, F et $F_q$, tous les deux à la fréquence f mais décalés l'un par rapport à l'autre d'un quart de période, sont créés dans le circuit comparateur de fréquences. Les signaux A, F et $F_q$ sont traités comme des signaux logiques et sont combinés de manière à permettre d'étudier la variation dans le temps des quantités:

$$S = |S_1 - S_2|$$

$$D = |D_1 - D_2|$$

les deux barres verticales signifiant "valeur absolue de", et $S_1$, $S_2$, $D_1$, $D_2$ représentant respectivement

$$S_1 = d(A \oplus F) + d(A \oplus F_q)$$

$$S_2 = d(\overline{A \oplus F}) + d(\overline{A \oplus F_q})$$

$$D_1 = d(A \oplus F) + d(\overline{A \oplus F_q})$$

$$D_2 = d(\overline{A \oplus F}) + d(A \oplus F_q)$$

la notation d(X) signifiant "durée pendant laquelle l'expression logique X veut 1". Ainsi la partie droite de ces équations signifie, per exemple pour $D_1$: somme des intervalles de temps où, à la fois, A modulo F est égal à 1 et l'inverse de A modulo $F_q$ est égal à 1, c'est-à-dire A modulo $F_q$=0; ces équations peuvent donc sussi s'écrire:

$$S_1 = d(A\overline{FF_q} \cup \overline{A}FF_q)$$

ce qui signifie: $S_1$ est la somme des intervalles de temps où soit $A\overline{FF_q}$=1 soit $\overline{A}FF_q$=1, c'est-à-dire où soit A et inverse de F et inverse de $F_q$ égaux à 1, soit inverse de A et F et $F_q$ égaux à 1

$$S_2 = d(AFF_q \cup \overline{A}\overline{FF_q})$$

$$D_1 = d(A\overline{F}F_q \cup \overline{A}F\overline{F_q})$$

$$D_2 = d(AF\overline{F_q} \cup \overline{A}\overline{F}F_q)$$

dans ces circuits comparateurs de fréquences connus deux compteurs-décompteurs reçoivent respectivement

— sur leur entrée de commande de comptage les signaux

$$\overline{A}F\overline{F_q} \cup \overline{A}FF_q$$

$$A\overline{F}F_q \cup \overline{A}F\overline{F_q}$$

— sur leur entrée de commande de décomptage les signeux

$$AFF_q \cup \overline{A}\overline{FF_q}$$

$$AF\overline{F_q} \cup \overline{A}\overline{F}F_q$$

ces compteurs comptent des impulsions à une fréquence très supérieure à les fréquence f et leur compte est donc représentatif des fonctions S et D.

Si le signal A est à la fréquence f ou à une fréquence très voisine les deux compteurs ont leur compte qui varie plus dans un sens (comptage ou décomptage) que dans l'autre; le passage d'un compteur par une valeur prédéterminée est significatif du fait que la fréquence de A est égale à f ou très proche de f. Il est d'ailleurs à noter, que dans la mesure où le signal A est à la fréquence F, l'un des deux compteurs-décompteurs a son compte qui augmente (ou diminue), pendant une période

$$T = \frac{1}{f},$$

d'une valeur égale à un comptage permanent pendant la durée

$$\frac{T}{2}$$

et ceci quel que soit le déphasage entre le signal A et le signal F.

Si la fréquence du signal A n'est pas égale à f (ou très voisine de f) les deux compteurs-décompteurs comptent et décomptent pendant des intervalles de temps qui, en moyenne, s'équilibrant, si bien qu'alors leur compte n'atteint pas la valeur prédéterminée.

Dans ces circuits comparateurs de fréquences les compteurs-décompteurs sont remis à zéro (ou à une valeur donnée) par des signaux régulièrement espacés qui ne coïncident pas obligatoirement avec les transitions entre tonalités successives. Au début d'une telle transition le contenu des compteurs n'est donc pas rigoureusement nul (ou égal à la valeur donnée), ce qui est une cause de dégradation des performances car la valeur prédéterminée doit être choisie plus faible que celle qui, sans cela, serait strictement nécessaire.

Le circuit selon la figure est un circuit dans lequel les compteurs-décompteurs ont, à un moment donné, leur compte qui correspond à un comptage-décomptage effectué sur la totalité de lu durée d'une tonalité ou du moins sur un nombre entier de péroide

$$T = \frac{1}{f}$$

aussi proche que possible de la durée de la tonalité attendue.

La figure représente un signal A qui est un signal reçu par un récepteur et qui a été écrêté pour être utilisé comme un signal logique à deux niveaux "0" et "1". Ce signal est appliqué sur la première entrée d'un circuit logique 1 qui reçoit, d'un générateur de signaux 2, des signaux F et $F_q$ respectivement sur ses deuxième et troisième entrées. Les signaux F et $F_q$ sont des signaux carrés de fréquence f et sont décalés d'un quart de période l'un par rapport à l'autre.

Le circuit logique 1, qui comporte des inverseurs, des portes ET et des portes OU, élabore les signaux

$$A\overline{FF_q} \cup \overline{A}FF_q$$

$$AFF_q \cup \overline{A}\overline{FF_q}$$

$$A\overline{F}F_q \cup \overline{A}F\overline{F_q}$$

$$AF\overline{F_q} \cup \overline{A}\overline{F}F_q$$

ces signaux sont respectivement appliqués sur les premières entrées de quatre portes ET, 3, 4, 5, 6. Ces portes ET reçoivent sur leur seconde entrée des impulsions p à une fréquence très supérieure à f, qui sont fournies par un générateur d'impulsions 7.

Les sorties des portes ET 3 et 4 sont reliées respectivement à l'entrée de comptage (+) et à l'entrée de décomptage (—) d'un premier compteur-décompteur 8; les sorties des portes ET 5 et 6 sont reliées respectivement à l'entrée de comptage (+) et à l'entrée de décomptage (—) d'un second compteur-décompteur 9.

Les compteurs-décompteurs 8 et 9 ont une entrée de remise à une valeur donnée (la valeur correspondant dans cet exemple à leur demi-capacité: M) sur laquelle est appliqué un signal qui sera défini plus loin (signal R').

Les sorties multiples des compteurs-décompteurs 8 et 9 sont reliées aux entrées d'un circuit de décodage 10 qui fournit un signal de sortie lorsque l'un des deux compteurs-décompteurs passe par une valeur prédéterminée.

La partie du schéma qui vient d'être décrite et qui comporte les éléments repérés de 1 à 10 correspond au schéma d'un circuit comparateur de fréquences selon l'art connu. Dans un fonctionnement selon l'art connu du circuit composé des seuls éléments 1 à 10, le signal R', appliqué aux compteurs-décompteurs 8 et 9, est généralement un signal composé d'impulsions régulièrement espacées.

Le circuit comparateur de fréquences selon la figure comporte, en plus des éléments 1 à 10, une ligne à retard binaire, 11, et une porte "OU exclusif" 13. La ligne à retard 11, est, dans l'exemple décrit, un registre à décalage (shift register dans la littérature anglo-saxonne).

Le signal A est appliqué à l'entrée de signal de la ligne à retard 11 qui reçoit respectivement sur ses deux entrées d'horloge un signal d'horloge d'entrée $h_1$ et un signal d'horloge de sortie $h_2$; ces signaux $h_1$ et $h_2$ sont élaborés par le générateur de signaux 2.

La ligne à retard 11 fournit un signal de sortie $A_r$.

La porte "OU exclusif" 13 reçoit les signaux A et $A_r$ et a sa sortie reliée aux troisièmes entrées des portes ET 3, 4, 5, 6.

Un signal R d'initialisation, constitué par une impulsion, est produit lors de la mise en marche du circuit comparateur de fréquences selon la figure; il est appliqué à un basculeur monostable 12 de durée légèrement supérieure à la durée d'une tonalité. Pendant son état quasi-stable le basculeur monostable fournit un signal de sortie, R', qui maintient les compteurs-décompteurs 8, 9 à un compte initial M prédéterminé.

Soit B la durée connue d'une tonalité attendue de fréquence

$$f=\frac{1}{T};$$

les éléments 11, 13 décrite ci-avant fonctionnent de la manière suivante.

La ligne à retard 11 fonctionne sous l'action des signaux $h_1$ et $h_2$ choisis de fréquence égale à

$$\frac{N}{KT}$$

où N est le nombre d'étages de la ligne à retard et K un nombre entier. En général il y a intérêt à choisir K tel que KT soit voisin de B. Dans l'exemple décrit K satisfait la double inégalité:

$$KT \leqslant B < (K+1)T$$

Ainsi le retard apporté par la ligne à retard a pour valeur le nombre entier de périodes T comprises dans la durée B de la tonalité attendue.

Les signaux $h_1$ et $h_2$ sont des signaux rectangulaires décalés l'un par rapport à l'autre d'une demipériode.

Le ligne à retard fournit le signal $A_r$ qui est identique au signal A mais retardé de la durée KT.

La porte "OU exclusif" 13, bloque les portes ET 3, 4, 5, 6 lorsque le signal $A_r$ qu'elle reçoit sur une de ses entrées est égal au signal A qu'elle reçoit sur son autre entrée. Ainsi la porte "OU exclusif", 13, n'autorise le comptage (ou le décomptage) des impulsions p que lorsque $A_r$ est différent de A.

Au temps t (avec une origine des temps prise à l'instant KT après l'envoi du signal R') les signeux F et $F_q$ ont la même valeur qu'au temps t—KT étant donné qu'ils sont à la fréquence

$$f=\frac{1}{T}.$$

Donc, si $A_r$ est différent de A (c'est-à-dire si A au temps t—KT est différent de A au temps t) et si par exemple le compteur-décompteur 8 comptait au temps t—KT($\overline{AFF_1} \cup \overline{AFF_1}=1$), il décompters au temps t (car alors la relation $AFF_q \cup \overline{AFF_q}$ sera vérifiée). De même, avec $A_r$ différent de A, le compteur-décompteur 8 comptera à l'instant t s'il décomptait à l'instant t—KT et le compteur-décompteur 9 comptera ou décomptera à l'instant t selon qu'il décomptait ou comptait à l'instant t—KT.

En conclusion les compteurs-décompteurs 8 et 9 ont à tout instant t, des comptes qui sont représentatifs respectivement des fonctions S et D (telles que définies plus avant) entre les temps t—KT et t, c'est-à-dire des comptes représentatifs de l'intégration entre t—KT et t des durées

$$S= | [d(A\oplus F)+d(A\oplus F_q)]-[d(\overline{A\oplus F})+d(\overline{A\oplus F_q})] |$$

$$D= | [d(A\oplus F)+d(\overline{A\oplus F_q})]-[d(\overline{A\oplus F})+d(A\oplus F_q)] |$$

dans ces équations le signe+a le sans de la fonction ET logique tandis que le signe—a le sens du moins arithmétique.

Ainsi quand, pendant la durée KT, le signal reçu, A, aura eu la fréquence f, le compte de l'un des compteurs-décompteurs 8, 9 atteindra, par des comptages et/ou décomptages, l'une des deux valeurs dont la différence avec la valeur de son compte initial M sera égale à

$$\frac{KT'}{2}$$

aux éventuelles impulsions parasites près (T' étant le nombre d'impulsions p que fournit le générateur 7 pendant le temps T); ceci résulte de ce qui a été dit précédemment, à savoir que, quel que soit le déphasage entre A et F, l'un des deux compteurs-décompteurs a son compte qui varie de

$$\frac{T'}{2}$$

pendant une période T si A est à la fréquence f.

Le circuit de décodage 10 est réalisé de manière à donner un signal de sortie lorsque l'un ou l'autre des compteurs-décompteurs 8 et 9 passe par l'une des valeurs

$$M \pm \left| \frac{KT'}{2} - E \right|$$

où E est un nombre d'impulsions faible devant

$$\frac{KT'}{2}$$

pour tenir compte d'éventuelles impulsions parasites.

Là description qui vient d'être faite se rapporte à un circuit comparateur de fréquences d'un dispositif d'appel sélectif à 11 tonalités différentes dont les fréquences respectives sont celles définies par les normes C C I R pour les appels sélectifs. Le durée B est de 100 mS.

Dans le circuit comparateur de fréquence qui a servi pour la description, la ligne à retard 11 est un registre à décalage à 1024 bits, fabriqué par la société INTERSIL sous la référence IM 7722.

En plus des circuits qui viennent d'être décrits, le circuit comparateur de fréquences comporte un ensemble de circuits de commande qui permet de changer les fréquences des signaux fournis par le générateur de signaux 2 et le générateur d'impulsions 7 en fonction de la tonalité attendue et de sa durée quand cette durée n'est pas la même pour toutes les tonalités. Cet ensemble de circuits de commande n'étant pas nécessaire à la compréhension de l'invention n'a pas été représenté sur la figure.

**Revendications**

1. Circuit comparateur de fréquences comportant des moyens de comparaison (1,3—7) des signes A, F, $F_q$ des amplitudes instantanées respectives d'un signal reçu, d'un signal de référence de période T et du signal de référence déphasé de

$$\frac{T}{4},$$

des moyens de comptage (8, 9) fournissant un premier signal proportionnel à la différence entre les sommes des intervalles de temps où A est différent de F et $F_q$ et où A est identique à F et $F_q$ et un second signal proportionnel à la différence entre les sommes des intervalles de temps où A est différent de F et identique à $F_q$ et où A est identique à F et différent de $F_q$, caractérisé en ce qu'il comporte un circuit à retard (11) dont la durée du retard est KT (K entier positif) recevant un signal représentatif de A, et un circuit de blocage (13) bloquant le fonctionnement des moyens de comptage quand les signes des amplitudes des signaux d'entrée (A) et de sortie (Ar) du circuit à retard sont identiques.

2. Circuit comparateur de fréquences selon la revendication 1, destiné à reconnaître, dans le signal reçu, un signal de période égale à T et dont la durée B est connue et est supérieure à T, caractérisé en ce que K vérifie la double inégalité

$$KT \leqslant B < (K+1)T.$$

3. Circuit comparateur de fréquences selon l'une des revendications précédentes, caractérisé en ce que le circuit à retard (11) comporte une ligne à retard du type registre à décalage, dont le nombre d'étages est N et dont la fréquence des signaux d'horloge ($h_1$, $h_2$) est

$$h = \frac{N}{KT}.$$

4. Dispositif d'appel sélectif, caractérisé en ce qu'il est équipé d'au moins un circuit comparateur de fréquences selon l'une des revendications précédentes.

**Patentansprüche**

1. Frequenzvergleicherschaltung mit Mitteln (1,3—7) zum Vergleichen der Vorzeichen A, F, $F_q$ der Augenblicks-amplituden eines empfangenen Signals, eines Bezugssignals der Periode T bzw. eines um

$$\frac{T}{4}$$

phasenverschobenen Bezugssignals, mit Zähleinrichtungen (8, 9), die ein erstes Signal abgeben, das proportional zu der Differenz zwischen den Summen der Zeitintervalle ist, wo A verschieden von F und $F_q$ ist und wo A iden-

tisch mit F und $F_q$ ist, und ein zweites Signal abgeben, das proportional zu der Differenz zwischen den Summen der Zeitintervalle ist, wo A verschieden von F und gleich $F_q$ ist und wo A gleich F und verschieden von $F_q$ ist, dadurch gekennzeichnet, daß sie eine Verzögerungsschaltung (11) umfaßt, deren Verzögerungsdauer KT beträgt (K ganzzahlig positiv) und die ein für A representatives Signal empfängt, und eine Blockierschaltung (13) enthält, welche die Funktion der Zähleinrichtungen blockiert, wenn die Vorzeichen der Amplituden des Eingangssignals (A) und des Ausgangssignals ($A_r$) der Verzögerungsschaltung gleich sind.

2. Frequenzvergleicherschaltung nach Anspruch 1, die dazu bestimmt ist, in dem empfangenen Signal ein Signal der Periode T zu erkennen, dessen Dauer B bekannt ist und größer als T ist, dadurch gekennzeichnet, daß K die folgende doppelte Ungleichung erfüllt:

$$KT \leqslant B < (K+1)T.$$

3. Frequenzvergleicherschaltung nach einem der vorstehenden Ansprüche, dadurch gekennzeichnet, daß die Verzögerungsschaltung (11) eine Verzögerungsleitung vom Typ eines Schieberegisters umfaßt, dessen Anzahl von Stufen N beträgt und dessen Taktsignalfrequenz ($h_1$, $h_2$)

$$h = \frac{N}{KT}$$

beträgt.

4. Selektive Rufvorrichtung, dadurch gekennzeichnet, daß sie mit wenigstens einer Frequenzvergleicherschaltung nach einem der vorstehenden Ansprüche ausgerüstet ist.

## Claims

1. Frequency comparator circuit comprising means (1,3—7) for comparing the signs A, F, $F_q$ of the momentary amplitudes of a received signal, of a reference signal of the period T and of the reference signal phase-shifted by

$$\frac{T}{4},$$

respectively, counting means (8, 9) providing a first signal proportional to the difference between the sums of the time intervals where A is different from F and $F_q$ and where A is identical to F and $F_q$, and a second signal proportional to the difference between the sums of the time intervals where A is different from F and identical to $F_q$ and where A is identical to F and different from $F_q$, characterized in that it comprises a delay circuit (11) the delay duration of which is KT (K positive integer) and which receives a signal representative of A, and a disabling circuit (13) disabling operation of the counting means when the signs of the amplitudes of the input (A) and the output ($A_r$) signals of the delay circuit are identical.

2. Frequency comparator circuit in accordance with claim 1, and intended to recognize in the received signal a signal of the period T and the duration B of which is known and exceeds T, characterized in that K fulfills the double unequality

$$KT \leqslant B < (K+1)T.$$

3. Frequency comparator circuit in accordance with any of the preceding claims, characterized in that the delay circuit (11) comprises a delay line of shift register type, the number of stages of which is N and the clock signal frequency ($h_1$, $h_2$) is

$$h = \frac{N}{KT}.$$

4. Selective calling device, characterized in that it is equipped with at least one frequency comparator circuit in accordance with any of the preceding claims.